# EUROPEAN PATENT SPECIFICATION

(11) **EP 2 817 985 B1**
(45) Date of publication and mention of the grant of the patent: **12.10.2016**
(21) Application number: 12869126.8
(22) Date of filing: 22.02.2012
(51) Int. Cl.: H04W 8/20, H04W 4/00, H04L 29/08, H04L 12/24, H04W 24/02

(54) **METHODS, SYSTEMS, AND COMPUTER READABLE MEDIA FOR NETWORK METADATA BASED POLICY CONTROL**
VERFAHREN, SYSTEME UND COMPUTERLESBARE MEDIEN ZUR NETZWERKMETADATENBASIERTEN RICHTLINIENKONTROLLE
PROCÉDÉS, SYSTÈMES ET SUPPORTS LISIBLES PAR ORDINATEUR POUR LA RÉGULATION PAR POLITIQUES BASÉES SUR DES MÉTADONNÉES DE RÉSEAU

(43) Date of publication of application: 31.12.2014
(73) Proprietor: Tekelec Global, Inc., Morrisville, NC 27560 (US)
(72) Inventor: KUPINSKY, Stuart, Howard, Potomca, MD 20854 (US); MARSICO, Peter, J., Chapel' Hill, NC 27516 (US)
(74) Representative: Gill Jennings & Every LLP
(86) International application number: PCT/US2012/026178
(87) International publication number: WO 2013/126057

(56) References cited:
- EP-B1- 2 039 119
- WO-A2-2012/021344
- CN-A- 102 075 898
- US-A1- 2010 287 121
- US-A1- 2011 158 090
- US-A1- 2012 026 947
- US-A1- 2012 039 175

## Description

### TECHNICAL FIELD

The subject matter described herein relates to network policy control. More particularly, the subject matter described herein relates to methods, systems, and computer readable media for network metadata based policy control.

### BACKGROUND

In long term evolution (LTE) networks, the policy and charging rules function (PCRF) is the network entity that implements policy control decision flow and charging functionality. A separate entity, the policy and charging enforcement function (PCEF), implements policies in accordance with instructions from the PCRF. The interface between the PCRF and the PCEF is referred to as the Gx interface. The PCEF is typically co-located with a service node, such as a gateway GPRS support node (GGSN).

In LTE networks, the PCRF typically implements operator defined policy rules for each subscriber. For example, a subscriber may contract with the network operator for a particular amount of network bandwidth across all applications, and the operator may define rules that are used by the PCRF to instruct the PCEF to enforce those rules. When a subscriber seeks to access a network service, such as a video download service to the subscriber's mobile phone, a node referred to as an application function (AF), which provides the video download service, contacts the PCRF to request a particular amount of bandwidth for the video download. The PCRF evaluates the request to determine whether the requested bandwidth is within the contract limit for the subscriber. If the requested bandwidth is within the contract limit, the PCRF instructs the PCEF to allocate the requested bandwidth.

In some instances, it may be desirable to implement agreements between network operators and third parties, such as retailers, to provide enhanced services to subscribers, for example, when the subscribers visit a particular retailer or other entity. There is not believed to be a mechanism defined in current LTE network standards for implementing such agreements.

It may also be desirable to allow network operators to automatically provide enhancements to subscribers based on group subscriber behavior. For example, a retailer or other entity may be willing to enter an agreement with a network operator if the network operator provides incentives when groups of subscribers are present in the retailer's location.

Accordingly, there exists a need for methods, systems, and computer readable media for network metadata based policy control.

Document US 2012/039175 A1 discloses a method for dynamically modifying PCC rules in an LTE network based on the network health being monitored. The PCRF is triggered accordingly for adapting the rules which are subsequently forwarded to the PCEF.

Document US 2011/158090 A1 shows a policy selection process in the LTE PCC architecture thereby taking into account network condition (e.g. congestion event on network, node or application-level). Based on the subscribed service, the bandwidth of the UEs in a dedicated cell might be throttled differently.

### SUMMARY

The subject matter described herein includes methods, systems, and computer readable media for network metadata based policy control.

According to a first aspect there is provided a system as out in claim 1.

According to a second aspect there is provided a method as set out in claim 16.

The subject matter described herein for network metadata based policy control can be implemented using a non-transitory computer readable medium having stored thereon executable instructions that when executed by the processor of a computer control the computer to perform steps. Exemplary computer readable media suitable for implementing the subject matter described herein include disk memory devices, chip memory devices, application specific integrated circuits, and programmable logic devices. In addition, a computer readable medium that implements the subject matter described herein may be located on a single device or computing platform or may be distributed across multiple devices or computing platforms.

In addition, the term "node" as used herein refers to a physical computing platform that implements all or a portion of the functionality described herein for network metadata based policy control. For example, a network node may include one or more microprocessors, memory, and network interfaces.

### BRIEF DESCRIPTION OF THE DRAWINGS

Preferred embodiments of the subject matter described herein will now be explained with reference to the accompanying drawings of which:
Figure 1 is a message flow diagram illustrating exemplary messaging for implementing network metadata based policy control according to an embodiment of the subject matter described herein;
Figure 2 is a message flow diagram illustrating exemplary messaging for implementing network metadata based policy control according to an alternate embodiment of the subject matter described herein;
Figure 3A is a block diagram illustrating a PCRF with an integrated network metadata directed policy server according to an embodiment of the subject matter described herein;
Figure 3B is a block diagram illustrating a standalone network metadata directed policy server according to an embodiment of the subject matter described herein;
Figure 4 is a flow chart illustrating exemplary steps for network metadata directed policy control according to an embodiment of the subject matter described herein; and
Figure 5 is message flow diagram where a Diameter signaling router provides subscriber information to a network metadata directed policy server according to an embodiment of the subject matter described herein.

### DETAILED DESCRIPTION

The subject matter described herein includes methods, systems, and computer readable media for network metadata based policy control. For example, it may be desirable for a network operator, such as XYZ Wireless Company, to implement an agreement with a retailer, such as Joe's Java, such that when a certain number of the network operator's subscribers are within the retailer's location or locations, the values of the operator assigned policy control parameters for the subscribers will be temporarily enhanced. For example, if the network operator's subscribers each typically receive a maximum download speed of one megabyte per second, that speed may be increased by 20% for 15 minutes if a certain number of those subscribers visit the retailer's location or locations. The network operator thus provides an incentive for its subscribers to visit the retailer. In return for the incentive and the execution of the policy rule, the retailer may compensate the network operator.

In one embodiment, a network metadata directed policy server may collect network information regarding a plurality of subscribers and may derive network metadata from the received network information. For example, the network information may indicate locations of the operator's subscribers, and network metadata may include the number of the operator's subscribers currently visiting the retailer in one location or across plural business locations of the retailer. The network metadata directed policy server may then apply the rule to determine whether a threshold number of the subscribers are within the retailer's location or locations. The network metadata directed policy server may then instruct the PCRF to enhance the quality of service for the subscribers within the retailer's location or locations for a predetermined time period or until instructed to stop enhancing the quality of service. The PCRF may in turn instruct the PCEF to implement the policy that enhances the quality of service for the subscribers of the network operator that are in the particular retailer location or locations. In one embodiment, once the action specified by the policy is triggered, the PCRF or the network metadata directed policy server may generate a billing record for the enhancement of the QoS for the group of subscribers and use that record to collect revenue from the retailer as part of a previously negotiated business agreement between the network operator and the retailer.

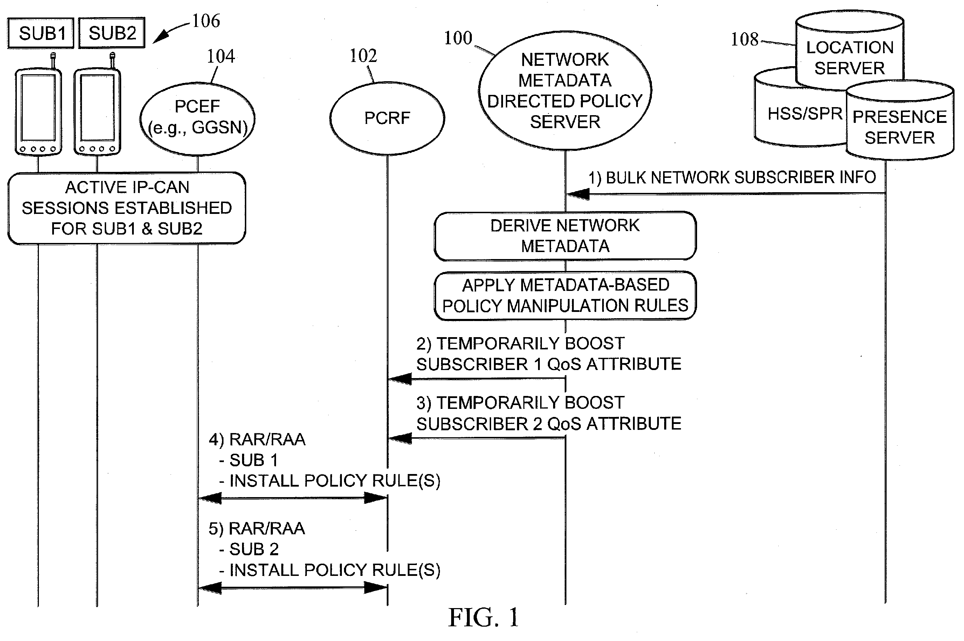

Figure 1 is a message flow diagram illustrating exemplary messaging for implementing network metadata based policy control according to an embodiment of the subject matter described herein. Referring to Figure 1, a network metadata directed policy server 100 may implement network metadata directed policy control rules. A PCRF 102 may implement policy control rules defined by the network operator for its subscribers. A PCEF 104 enforces policy control rules under the direction of PCRF 102. Mobile subscriber devices 106 may be any suitable mobile communications devices, such as mobile handsets, through which subscribers seek to access network services. Network information sources 108 may include home subscriber servers (HSSs), home location registers (HLRs), location servers, presence servers, or other suitable source of subscriber information.

In operation, network metadata directed policy server **100** implements the above-described network metadata based policy control rules, such as determining whether a certain number of a particular network operator's subscribers are within a particular retailer's location or locations and increasing data download bandwidth for the network operator's subscribers in the retailer's location or locations if the threshold requirement is met. Network metadata directed policy server **100** may communicate with PCRF **102** to temporarily increase or enhance QoS for the subscribers. PCRF **102** communicates with PCEF **104** to instruct PCEF **104** to implement the action specified by the policy control rule for subscriber devices **106.**

Although in Figure 1, network metadata directed policy server **100** and PCRF **102** are shown as separate nodes, network metadata directed policy server **100** and PCRF **102** may be co-located with each other. For example, the functionality of network metadata directed policy server **100** may be implemented by PCRF **102** without departing from the scope of the subject matter described herein.

In the above-described examples, network information sources include core network nodes, such as HLRs and HSSs. In an alternate example, network information sources **108** may also include mobile subscriber devices **106.** For instance, proactive universal integrated circuit card (UICC) is a procedure where the UICC within a phone can issue a geographic location request to the phone to obtain the geographic position of the phone. The UICC can then be queried, for example, by PCEF **104,** to provide the geographic position of the phone. PCEF **104** may provide the geographic position information to PCRF **102** and/or network metadata directed policy server **100,** which can then use the geographic information to derive the network metadata, such as whether the phone is within the geographic domain of a particular retailer. Each mobile subscriber device **106** may determine its own location through any suitable mechanism, including an internal global positioning system (GPS) chip or through triangulation based on signals detected from different radio towers.

Referring to the message flow in Figure 1, in message 1, network information sources **108** provide subscriber information for a plurality of subscribers to network metadata directed policy server **100.** Network metadata directed policy server **100** derives network metadata, such as the number of a particular network operator's subscribers currently within a particular retailer's location or locations, from the subscriber network information and applies a metadata policy manipulation rule. In one example, the network metadata based policy manipulation rule may include a condition, such as whether the number of subscribers within a retailer's location or locations exceeds a threshold, and an action. The action may be to enhance or manipulate an operator controlled QoS parameter for the subscribers. In messages 2 and 3, network metadata directed policy server **100** instructs PCRF **102** to enhance a QoS attribute for the subscribers. In this example, specific subscribers may be identified in the instructions from network metadata directed policy server **100.** The subscribers may be identified by IMSI or other suitable subscriber identifier.

In messages 4 and 5, PCRF **102** signals PCEF **104** over the Gx interface to implement the policy to enhance the QoS attribute for the subscribers. In the illustrated example, the messaging sent over this interface includes re-authentication request (RAR) and re-authentication answer (RAA) messages. However, the present subject matter is not limited to these particular messages. Any messaging suitable for instructing a policy and charging enforcement node to implement subscriber specific policies is intended to be within the scope of the subject matter described herein.

In the case where the subscribers whose QoS attributes are being enhanced are in different locations, such as at plural locations of the same retailer, network metadata directed policy server **100** may identify the PCRF associated with each subscriber, and each PCRF will signal the PCEF currently enforcing policy rules for each subscriber. Binding information that indicates which sessions are being handled by which PCRF may be stored in the HSS or in a separate subscriber binding repository (SBR). In either case, network metadata directed policy server **100** may query the HSS or SBR for the information. In an alternate implementation, network metadata directed policy server **100** may subscribe to each PCRF in its network and obtain binding information as new sessions are established. In yet another alternate implementation, network metadata directed policy server 100 may obtain the binding information from a Diameter signaling router (DSR) that stores and/or generates such binding information.

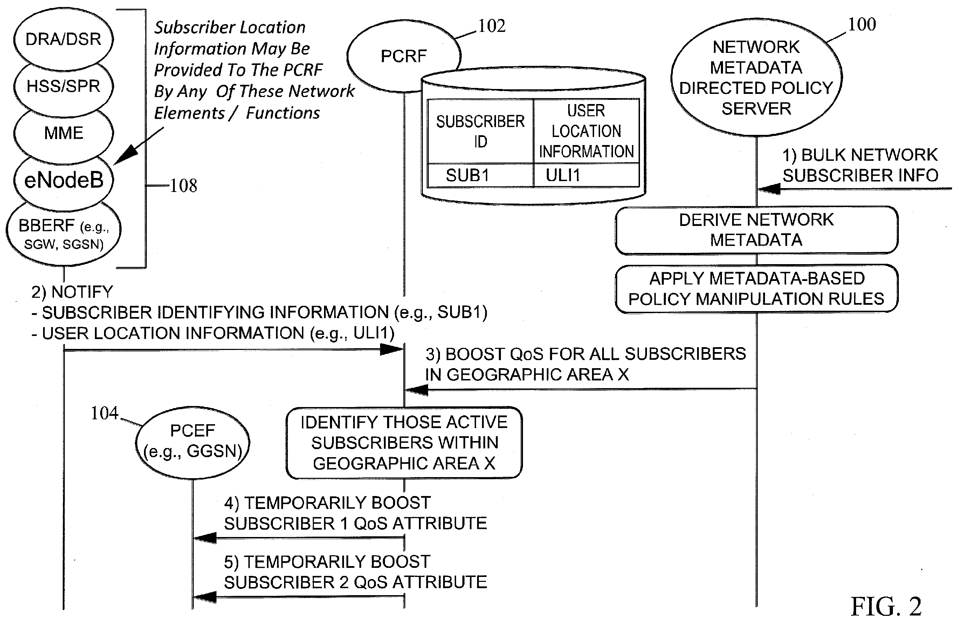

Figure 2 illustrates an alternate embodiment of the subject matter described herein. In Figure 2, rather than having the network metadata directed policy server **100** send instructions for manipulating the operator controlled policies of individual subscribers, network metadata directed policy server **100** instructs PCRF **102** to boost the QoS for all of the network operator's subscribers within a particular geographic area. PCRF **102** then maps the geographic area to specific subscribers of the network operator that are currently active within that area and instructs PCEF **104** to implement the policies as described above.

Referring to the message flow illustrated in Figure 2, in message 1, network metadata directed policy server **100** receives network location information regarding subscribers. As set forth above, the location information may come from network information sources **108,** such as a location server, an HLR, an HSS, a presence server, or from mobile subscriber devices **106.** In message 2, PCRF **102** is notified of subscriber's present geographic locations. Message 2 may be sent periodically by each PCEF or other node in contact with subscriber devices **106.** Upon receiving the subscriber location information from network information sources **108,** network metadata directed policy server **100** derives network metadata. The network metadata may be aggregate subscriber information that indicates the number of subscribers having the same characteristic, such as being located in the same location or locations of a retailer. Network metadata directed policy server **100** may determine whether the subscriber aggregation information indicates that a threshold for a particular organization is met. If the threshold is met, in message 3, network metadata directed policy server **100** sends a message to PCRF **102** to enhance the quality of service for all subscribers within the geographic area corresponding to the organization. PCRF **102** may identify active subscribers within the geographic area that are subscribers of the particular service provider that has an agreement with the business located in the geographic area. PCRF **102** may then send a message or messages to PCEF **104** to increase the quality of service attribute for the identified subscribers.

The instructions sent by network metadata directed policy server **100** to enhance the QoS parameter for a particular subscriber are distinct from the instructions sent over the Rx interface by an application function (AF) to request quality of service for a particular session. Such a request must be made within the subscriber's operator assigned policy control parameters. The instructions sent by network metadata directed policy server **100** may enhance a quality of service parameter, such as total download bandwidth to be shared across all services, from the operator assigned value to an enhanced value. The enhanced value may be outside the scope of the parameter values that an application function can request. In other words, an application function may not be capable of modifying an operator controlled policy parameter beyond operator controlled limits set for the subscriber. Likewise, an application function may be incapable of implementing an agreement between a network operator and a third party, such as retailer. However, the subject matter described herein is not limited to enhancing a quality of service parameter that is global across services that a subscriber may request. The operator controlled quality of service parameter that is manipulated may be the download bandwidth assigned to a currently active session so that the quality of service for a particular subscriber or group of subscribers immediately improves for in-progress sessions in response to receiving the manipulation command.

The time period during which the QoS parameter value is enhanced may be defined by a timer that expires or by start and stop messages sent by network metadata directed policy server **100.** For example, network metadata directed policy server **100** may signal PCRF **102** at the initiation and termination of a policy enhancement period to define the term or time period during which QoS parameters are enhanced. Network metadata directed policy server **100** may internally monitor the QoS enhancement period and send the QoS enhancement termination signal to the PCRF at the end of the policy enhancement period. In an alternate implementation, network metadata directed policy server **100** may specify a duration in the initial instructions to enhance the QoS attribute, and PCRF **102** may only enhance the attribute for this duration. After the end of the QoS enhancement period, QoS parameter values for the subscribers may return to pre-enhancement levels. Either implementation is intended to be within the scope of the subject matter described herein.

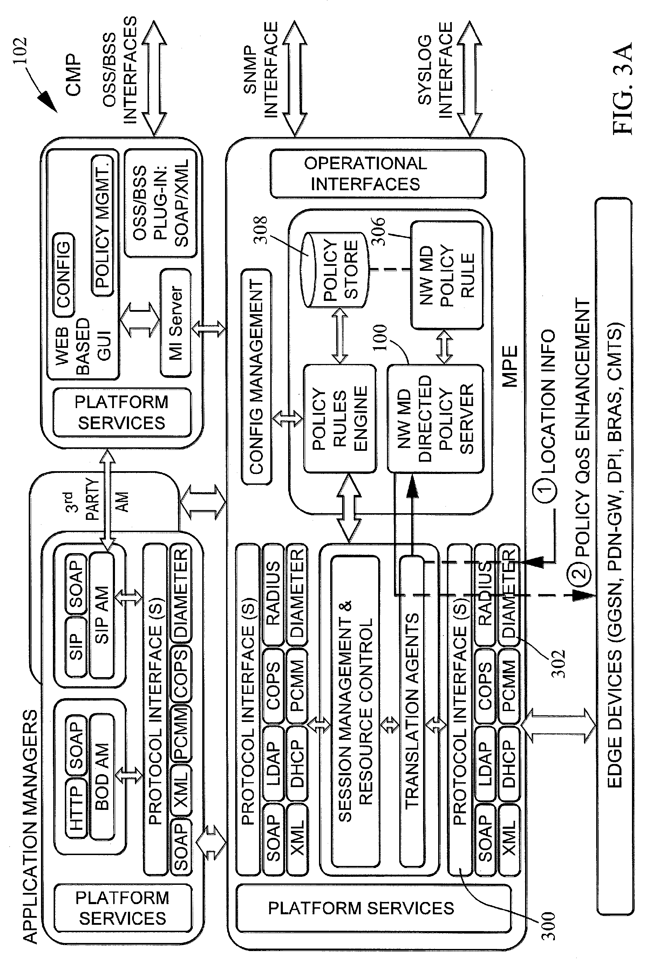

Figure 3A is a block diagram illustrating an embodiment of the subject matter described herein in which network metadata directed policy server **100** is a component of PCRF **102.** Referring to Figure 3A, PCRF **102** includes protocol interfaces **300** that interface with external devices via various protocols. Of interest to the subject matter described herein is Diameter interface **302** through which PCRF **102** may receive subscriber location information from an HSS or other network device or node. Location information may be passed from protocol interfaces **300** to translation agent **304,** which translate the location information into an internal format used by PCRF **102** and forwards the location information to network metadata directed policy server **100.** Network metadata directed policy server **100** may access a network metadata policy rule **306** stored in policy store **308.** Network metadata policy rule **306** may be any of the above-described rules that allow network metadata directed policy server **100** to derive network metadata from the subscriber location information and then determine whether the derived network metadata meets a threshold condition. If network metadata directed policy server **100** determines that the threshold condition is met, network metadata directed policy server **100** may cause PCRF **102** to send instructions to one or more PCEF nodes to enhance the quality of service of the identified subscribers.

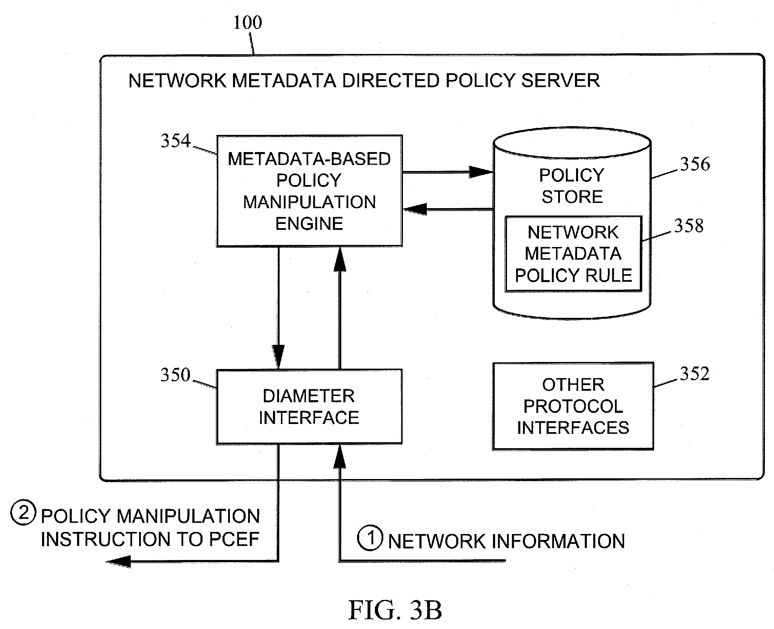

In the embodiment illustrated in Figure 3A, network metadata directed policy server **100** is a component of PCRF **102.** In an alternate embodiment, network metadata directed policy server **100** may be a standalone node that receives the network information network information sources **108** and instructs the PCEF to enhance the QoS for the identified subscribers without first sending the instruction to PCRF **102.** Figure 3B illustrates such an embodiment. In Figure 3B, network metadata directed policy server **100** may include a Diameter interface **350** that sends and receives Diameter signaling messages. Network metadata directed policy server **100** may further include other protocol interfaces **352** for communicating via protocols other than Diameter. For example, the other protocol interfaces **352** may include a mobile application part (MAP) interface for receiving MAP messages containing subscriber information, a presence interface receiving presence messages containing subscriber information, and/or a session initiation protocol (SIP) interface for receiving subscriber information from mobile handsets. Network metadata directed policy server **100** may further includes a metadata based policy manipulation engine **354** and a policy store **356.** Network metadata based policy manipulation engine **354** may derive network metadata from received network information, access policy store **356** to obtain a network metadata policy manipulation rule **358,** apply the rule, and generate and send an instruction to the PCEF to enhance the QoS of identifier subscribers if the condition of the rule is satisfied.

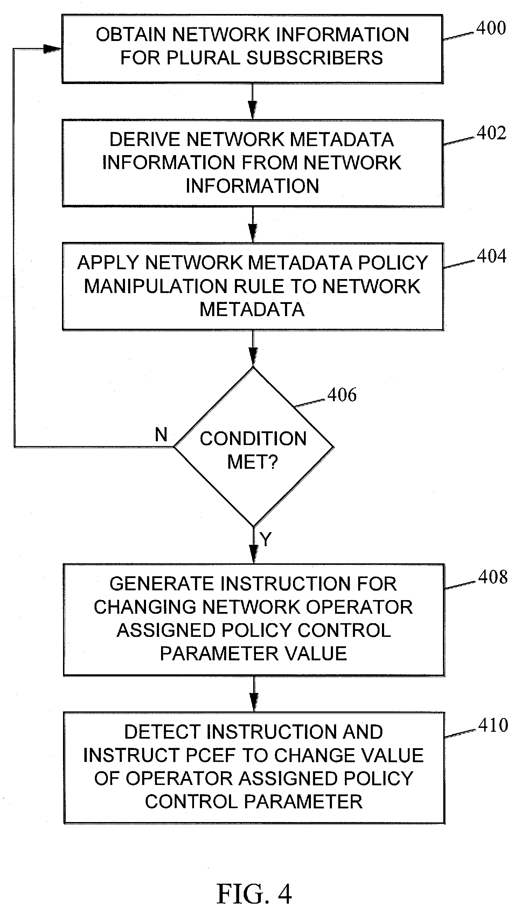

Figure 4 is a flow chart illustrating exemplary overall steps for network metadata directed policy control according to an embodiment of the subject matter described herein. Referring to Figure 4, in step **400,** network metadata directed policy server **100** obtains network information regarding a plurality of subscribers. For example, as illustrated in Figure 3, network metadata directed policy server **100** may obtain subscriber location information from a location server, an HLR, an HSS, a presence server, and/or from mobile handsets. In step **402,** network metadata directed policy server **100** derives network metadata from the network information. For example, as set forth above, network metadata directed policy server **100** may determine subscriber aggregation information that indicates the number of subscribers currently present in the business location of an entity.

In steps **404** and **406,** network metadata directed policy server **100** applies a network metadata policy manipulation rule for changing a value of an operator assigned policy control parameter for the subscribers. If the condition of the rule is met, network metadata directed policy server **100** may determine that the QoS for subscribers within the business location should be increased temporarily. Accordingly, in step **408,** network metadata directed policy server **100** generates an instruction for changing the network operator assigned policy control parameter for the subscribers. If the condition of the rule is not met, control returns to step **400** where network information is received and the process is repeated.

Returning to step **408,** assuming that the condition is met, control proceeds to step **410,** where PCRF **102** detects the instruction and instructs a PCEF to change the value of the operator assigned policy control parameter for the subscribers. For example, referring to Figure 3, PCRF **102** may forward the instruction to the GGSN or other node that enforces the policies for the identified geographic areas.

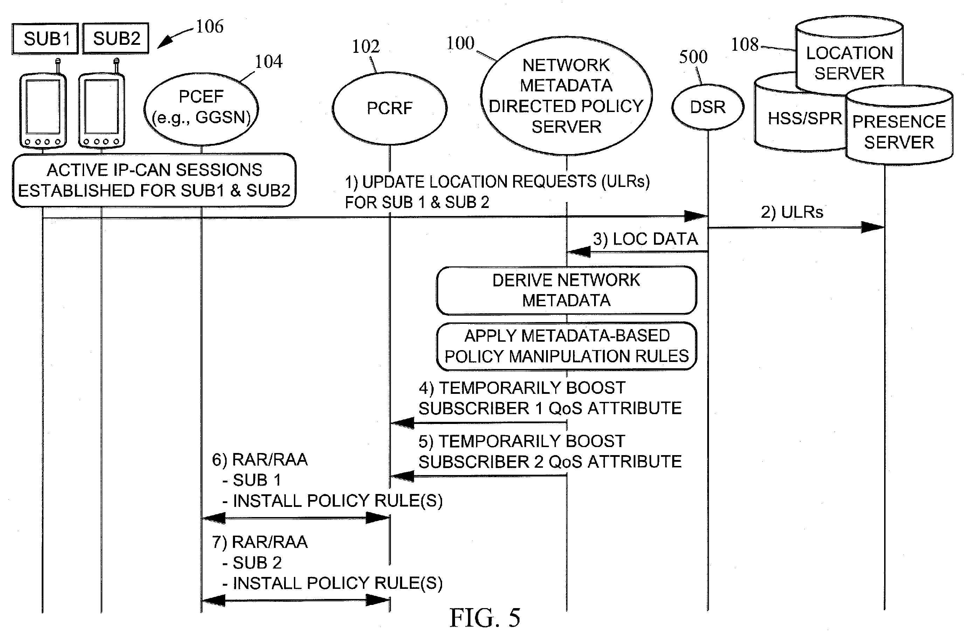

In the examples illustrated in Figures 1 and 2, network metadata directed policy server **100** receives policy information from network sources **108.** In an alternate implementation, network information may be intercepted by an intermediate node, such as a Diameter signaling router (DSR), and provided by the DSR to network metadata directed policy server **100.** Figure 5 illustrates such an embodiment. In Figure 5, subscriber devices **106** send update location request messages to network location nodes, such as an HSS. DSR **500** intercepts these messages, extracts location data, and forwards the location data to network metadata directed policy server **100.** DSR **500** may route the original update location request messages to the HSS. The remaining operation in Figure 5 is similar to that in Figure 1 where network metadata is derived from the location information, a policy instruction is generated, and the instruction is sent to PCEF **104.**

Providing network metadata based policy control allows network operators to enter agreements with retailers based on groups of subscribers visiting a retailer's location or locations. For example, if, as described above, a policy enhancement is triggered based on a group of subscribers being in a retailer's location or locations at the same time or within a predetermined time period of each other, the retailer's obligation to compensate the network operator may only be triggered when there is a substantial benefit to the retailer caused by the threshold number of subscribers visiting the retailer's location or locations. Providing policy enhancement incentives based on groups of subscribers, rather than individual subscribers, thus decreases the administrative cost of providing policy enhancement incentives by only triggering a retailer's compensation obligations when the threshold is met.

It will be understood that various details of the presently disclosed subject matter may be changed without departing from the scope of the presently disclosed subject matter. Furthermore, the foregoing description is for the purpose of illustration only, and not for the purpose of limitation.

## Claims

1. A system for network metadata based policy control, the system comprising:
a policy store for storing at least one network metadata policy manipulation rule for changing a value of an operator assigned policy control parameter for subscribers; and
a network metadata directed policy server (100) for obtaining network information for a plurality of subscribers, for deriving network metadata from the network information, for accessing the policy store and applying one of the network metadata based policy manipulation rules for changing a value of an operator assigned policy control parameter for the subscribers, and for generating an instruction for changing the value of the network operator assigned policy control parameter for the subscribers;
wherein the network information identifies geographic locations of the subscribers and wherein the network metadata comprises a number of a service provider's operators that are present in a single retailer location or across plural retailer locations.

2. The system of claim 1 comprising a policy and charging rules function (PCRF) node (102) for detecting the instruction and for instructing a policy and charging enforcement function (PCEF) node (104) to change the value of the operator assigned policy control parameter for the subscribers.

3. The system of claim 1 wherein the network metadata directed policy server (100) is configured to instruct a policy and charging enforcement function (PCEF) node (104) to change the value of the operator assigned policy control parameter for the subscribers.

4. The system of claim 1 wherein network metadata directed policy server (100) is a standalone node that instructs a policy and charging enforcement function (PCEF) node (104) to enhance QoS for the subscribers without first sending an instruction to a policy and charging rules function (PCRF) node (102).

5. The system of claim 1 wherein the network metadata policy manipulation rule is based on an agreement between a wireless network operator and a retailer.

6. The system of claim 1 wherein the instruction identifies individual subscribers to which the network policy manipulation rule is to be applied.

7. The system of claim 2 wherein the instruction identifies a geographic area to which the network metadata policy manipulation rule is to be applied and wherein the PCRF node (102) identifies individual subscribers within the geographic area to which the network metadata policy manipulation rule is to be applied.

8. The system of claim 1 wherein the network metadata policy manipulation rule identifies subscribers at a plurality of different retailer locations whose download bandwidth is to be temporarily enhanced.

9. The system of claim 2 wherein the network metadata policy manipulation rule identifies a plurality of retailer locations where download bandwidth is to be temporarily enhanced and wherein the PCRF node (102) is configured to identify individual subscribers at the retailer locations whose download bandwidths are to be temporarily enhanced.

10. The system of claim 1 wherein the network operator assigned policy control parameter comprises a download bandwidth parameter.

11. The system of claim 1 wherein the network metadata directed policy server (100) defines a time period during which the value of the network operator assigned policy control parameter will be changed.

12. The system of claim 2 wherein the network metadata directed policy server (100) or the PCRF node (102) generates an accounting record for the changing of the value of the network operator assigned policy control parameter.

13. The system of claim 1 wherein the network metadata directed policy server (100) is configured to obtain the network information from a home subscriber server, a location server, a presence server, or mobile handsets.

14. The system of claim 1 comprising a Diameter signaling router (DSR) (500) configured to intercept update location messages regarding the subscribers and to provide corresponding subscriber information to the network metadata directed policy server (100).

15. The system of claim 1 comprising a policy and charging rules function (PCRF) node (102), wherein the network metadata directed policy server (100) and the policy store are components of the PCRF node (102).

16. A method for network metadata based policy control, the method comprising:
at a network metadata directed policy server (100):
obtaining network information for a plurality of subscribers, deriving network metadata from the network information;
applying a network metadata based policy manipulation rule for
changing a value of an operator assigned policy control parameter for the subscribers, and
generating an instruction for changing the value of the network operator assigned policy control parameter for the subscribers;
wherein the network information identifies geographic locations of the subscribers and wherein the network metadata comprises a number of a service provider's operators that are present in a single retailer location or across plural retailer locations.

17. The method of claim 16, the method being implemented by operating a system according to any of claims 1 to 15.

18. A non-transitory computer readable medium having stored thereon executable instructions that when executed by the processor of a computer control, the computer to perform the method of any of claims 16 or 17.

## Patentansprüche

1. System für eine Netzwerkmetadaten-basierte Richtlinienkontrolle, wobei das System Folgendes umfasst:
einen Richtlinienspeicher zum Speichern mindestens einer Manipulationsregel für Netzwerkmetadatenrichtlinien zum Ändern eines Werts eines betreiberzugewiesenen Richtlinienkontrollparameters für Teilnehmer; und
einen Netzwerkmetadaten-gesteuerten Richtlinienserver (100) zum Erhalten von Netzwerkinformationen für eine Vielzahl von Teilnehmern, zum Ableiten von Netzwerkmetadaten aus den Netzwerkinformationen, zum Zugreifen auf den Richtlinienspeicher und zum Anwenden einer der Netzwerkmetadaten-basierten Richtlinienmanipulationsregeln, zum Ändern eines Werts eines betreiberzugewiesenen Richtlinienkontrollparameters für die Teilnehmer; und zum Erzeugen einer Anweisung zum Ändern des Werts des vom Netzwerkbetreiber zugewiesenen Richtlinienkontrollparameters für den Teilnehmer;
wobei die Netzwerkinformationen geografische Standorte der Teilnehmer identifizieren und wobei die Netzwerkmetadaten eine Anzahl der Betreiber eines Dienstanbieters umfassen, die an einem einzelnen Händlerstandort oder an mehreren Händlerstandorten vorhanden sind.

2. System nach Anspruch 1, das einen Knoten (102) einer Richtlinien- und Gebührenerhebungsregelnfunktion (PCRF) für Folgendes umfasst: zum Erfassen der Anweisung und zum Anweisen eines Knotens (104) einer Richtlinien- und Gebührenerhebungsregelnfunktion (PCRF), den Wert des betreiberzugewiesenen Richtlinienkontrollparameters für die Teilnehmer zu ändern.

3. System nach Anspruch 1, wobei der Netzwerkmetadaten-gesteuerte Richtlinienserver (100) dafür konfiguriert ist, einen Knoten (104) einer Richtlinien- und Gebührenerhebungsregelnfunktion (PCRF) anzuweisen, den Wert des betreiberzugewiesenen Richtlinienkontrollparameters für die Teilnehmer zu ändern.

4. System nach Anspruch 1, wobei der Netzwerkmetadaten-gesteuerte Richtlinienserver (100) ein unabhängiger Knoten ist, der einen Knoten (104) einer Richtlinien- und Gebührenerhebungsregelnfunktion (PCRF) anweist, die QoS für die Teilnehmer zu verbessern, ohne zuerst eine Anweisung an einen Knoten (102) einer Richtlinien- und Gebührenerhebungsregelnfunktion zu senden.

5. System nach Anspruch 1, wobei die Manipulationsregel für Netzwerkmetadatenrichtlinien auf einer Vereinbarung zwischen einem drahtlosen Netzwerkbetreiber und einem Händler basiert.

6. System nach Anspruch 1, wobei die Anweisung einzelne Teilnehmer identifiziert, auf die die Manipulationsregel für Netzwerkrichtlinien anzuwenden ist.

7. System nach Anspruch 2, wobei die Anweisung ein geografisches Gebiet identifiziert, auf die die Manipulationsregel für Netzwerkmetadatenrichtlinien anzuwenden ist, und wobei der PCRF-Knoten (102) einzelne Teilnehmer innerhalb des geographischen Gebiets identifiziert, auf die die Manipulationsregel für Netzwerkmetadatenrichtlinien anzuwenden ist.

8. System nach Anspruch 1, wobei die Manipulationsregel für Netzwerkmetadatenrichtlinien Teilnehmer an einer Vielzahl von verschiedenen Händlerstandorten identifiziert, deren Download-Bandbreite vorübergehend verbessert werden soll.

9. System nach Anspruch 2, wobei die Manipulationsregel für Netzwerkmetadatenrichtlinien eine Vielzahl von Händlerstandorten identifiziert, bei denen die Download-Bandbreite vorübergehend verbessert werden soll, wobei der PCRF-Knoten (102) dafür konfiguriert ist, einzelne Teilnehmer an den Händlerstandorten zu identifizieren, deren Download-Bandbreiten vorübergehend verbessert werden sollen.

10. System nach Anspruch 1, wobei der vom Netzwerkbetreiber zugewiesene Richtlinienkontrollparameter einen Download-Bandbreitenparameter umfasst.

11. System nach Anspruch 1, wobei der Netzwerkmetadaten-gesteuerte Richtlinienserver (100) einen Zeitraum definiert, während dem der Wert des netzwerkbetreiberzugewiesenen Richtlinienkontrollparameters geändert wird.

12. System nach Anspruch 2, wobei der Netzwerkmetadaten-gesteuerte Richtlinienserver (100) oder der PCRF-Knoten (102) einen Abrechnungsdatensatz erzeugt, um den Wert des netzwerkbetreiberzugewiesenen Richtlinienkontrollparameters zu ändern.

13. System nach Anspruch 1, wobei der Netzwerkmetadaten-gesteuerte Richtlinienserver (100) dafür konfiguriert ist, die Netzwerkinformationen von Folgendem zu erhalten: einem Heimteilnehmerserver, einem Lokalisierungsserver, einem Präsenzserver oder von Mobiltelefonen.

14. System nach Anspruch 1, das einen Durchmessersignalisierungsrouter (DSR) (500) umfasst, der für Folgendes konfiguriert ist: Abfangen von Standortaktualierungsnachrichten in Bezug auf die Teilnehmer und Bereitstellen von entsprechenden Teilnehmerinformationen für den Netzwerkmetadaten-gesteuerten Richtlinienserver (100).

15. System nach Anspruch 1, das einen Knoten (102) einer Richtlinien- und Gebührenerhebungsregelnfunktion (PCRF), wobei der Netzwerkmetadaten-gesteuerte Richtlinienserver (100) und der Richtlinienspeicher Komponenten des PCRF-Knotens (102) sind.

16. Verfahren für eine Netzwerkmetadaten-basierte Richtlinienkontrolle, wobei das Verfahren Folgendes umfasst:
bei einen Netzwerkmetadaten-gesteuerten Richtlinienserver (100):
Erhalten von Netzwerkinformationen für eine Vielzahl von Teilnehmern, Ableiten von Netzwerkmetadaten aus den Netzwerkinformationen;
Anwenden einer Netzwerkmetadaten-basierten Richtlinienmanipulationsregel zum Ändern eines Werts eines betreiberzugewiesenen Richtlinienkontrollparameters für die Teilnehmer; und
Erzeugen einer Anweisung zum Ändern des Werts des netzwerkbetreiberzugewiesenen Richtlinienkontrollparameters für die Teilnehmer;
wobei die Netzwerkinformationen geografische Standorte der Teilnehmer identifizieren und wobei die Netzwerkmetadaten eine Anzahl der Betreiber eines Dienstanbieters umfassen, die an einem einzelnen Händlerstandort oder an mehreren Händlerstandorten vorhanden sind.

17. Verfahren nach Anspruch 16, wobei das Verfahren durch Betreiben eines Systems nach einem der Ansprüche 1 bis 15 implementiert wird.

18. Nicht-transitorisches computerlesbares Medium, auf dem ausführbare Anweisungen gespeichert sind, die, wenn sie von einem Prozessor eines Computers ausgeführt werden, den Computer so steuern, dass er das Verfahren nach einem der Ansprüche 16 oder 17 durchführt.

## Revendications

1. Système servant à des fins de régulation de politiques en fonction de métadonnées de réseau, le système comportant :
un dispositif de stockage de politiques servant à stocker au moins une règle de manipulation de politiques en fonction de métadonnées de réseau permettant de changer une valeur d'un paramètre de régulation de politique attribué par l'opérateur pour des abonnés ; et
un serveur de politiques en association à des métadonnées de réseau (100) servant à obtenir des informations de réseau pour une pluralité d'abonnés, servant à dériver des métadonnées de réseau en provenance des informations de réseau, servant à accéder au dispositif de stockage de politiques et à appliquer l'une des règles de manipulation de politiques en fonction de métadonnées de réseau afin de changer une valeur d'un paramètre de régulation de politique attribué par l'opérateur pour les abonnés, et servant à générer une instruction destinée à changer la valeur du paramètre de régulation de politique attribué par l'opérateur de réseau pour les abonnés ;
dans lequel les informations de réseau identifient des emplacements géographiques des abonnés et dans lequel les métadonnées de réseau comportent un certain nombre d'opérateurs d'un fournisseur de services qui sont présents dans un seul emplacement de détaillant ou auprès de plusieurs emplacements de détaillants.

2. Système selon la revendication 1, comportant un noeud à fonction de règles de politique et de facturation (PCRF) (102) servant à détecter l'instruction et à ordonner à un noeud à fonction d'application de politique et de facturation (PCEF) (104) de changer la valeur du paramètre de régulation de politique attribué par l'opérateur pour les abonnés.

3. Système selon la revendication 1, dans lequel le serveur de politiques en association à des métadonnées de réseau (100) est configuré pour ordonner à un noeud à fonction d'application de politique et de facturation (PCEF) (104) de changer la valeur du paramètre de régulation de politique attribué par l'opérateur pour les abonnés.

4. Système selon la revendication 1, dans lequel le serveur de politiques en association à des métadonnées de réseau (100) est un noeud autonome qui ordonne à un noeud à fonction d'application de politique et de facturation (PCEF) (104) d'améliorer la qualité de service pour les abonnés sans avoir à tout d'abord envoyé une instruction à un noeud à fonction de règles de politique et de facturation (PCRF) (102).

5. Système selon la revendication 1, dans lequel la règle de manipulation de politiques en fonction de métadonnées de réseau est basée sur un accord entre un opérateur de réseau sans fil et un détaillant.

6. Système selon la revendication 1, dans lequel l'instruction identifie des abonnés individuels auxquels la règle de manipulation de politiques de réseau doit être appliquée.

7. Système selon la revendication 2, dans lequel l'instruction identifie une zone géographique à laquelle la règle de manipulation de politiques en fonction de métadonnées de réseau doit être appliquée et dans lequel le noeud à PCRF (102) identifie des abonnés individuels dans les limites de la zone géographique auxquels la règle de manipulation de politiques en fonction de métadonnées de réseau doit être appliquée.

8. Système selon la revendication 1, dans lequel la règle de manipulation de politiques en fonction de métadonnées de réseau identifie des abonnés au niveau d'une pluralité de différents emplacements de détaillants dont la bande passante de téléchargement doit être temporairement améliorée.

9. Système selon la revendication 2, dans lequel la règle de manipulation de politiques en fonction de métadonnées de réseau identifie une pluralité d'emplacements de détaillants où la bande passante de téléchargement doit être temporairement améliorée et dans lequel le noeud à PCRF (102) est configuré pour identifier des abonnés individuels au niveau des emplacements de détaillants dont les bandes passantes de téléchargement doivent être temporairement améliorées.

10. Système selon la revendication 1, dans lequel le paramètre de régulation de politique attribué par l'opérateur de réseau comporte un paramètre de bande passante de téléchargement.

11. Système selon la revendication 1, dans lequel le serveur de politiques en association à des métadonnées de réseau (100) définit une période de temps pendant laquelle la valeur du paramètre de régulation de politique attribué par l'opérateur de réseau sera changée.

12. Système selon la revendication 2, dans lequel le serveur de politiques en association à des métadonnées de réseau (100) ou le noeud à PCRF (102) génère un relevé comptable pour le changement de la valeur du paramètre de régulation de politique attribué par l'opérateur de réseau.

13. Système selon la revendication 1, dans lequel le serveur de politiques en association à des métadonnées de réseau (100) est configuré pour obtenir les informations de réseau en provenance d'un serveur d'abonnés domestiques, d'un serveur d'emplacements, d'un serveur de présences, ou de combinés mobiles.

14. Système selon la revendication 1, comportant un routeur de signalisation Diameter (DSR) (500) configuré pour intercepter des messages d'emplacements mis à jour concernant les abonnés et pour fournir des informations d'abonnés qui correspondent à destination du serveur de politiques en association à des métadonnées de réseau (100).

15. Système selon la revendication 1, comportant un noeud à fonction de règles de politique et de facturation (PCRF) (102), dans lequel le serveur de politiques en association à des métadonnées de réseau (100) et le dispositif de stockage de politiques sont des composants du noeud à PCRF (102).

16. Procédé servant à des fins de régulation de politiques en fonction de métadonnées de réseau, le procédé comportant :
au niveau d'un serveur de politiques en association à des métadonnées de réseau (100) les étapes consistant à :
obtenir des informations de réseau pour une pluralité d'abonnés, dériver des métadonnées de réseau en provenance des informations de réseau ;
appliquer une règle de manipulation de politiques en fonction de métadonnées de réseau afin de changer une valeur d'un paramètre de régulation de politique attribué par l'opérateur pour les abonnés, et
générer une instruction afin de changer la valeur du paramètre de régulation de politique attribué par l'opérateur de réseau pour les abonnés ;
dans lequel les informations de réseau identifient des emplacements géographiques des abonnés et dans lequel les métadonnées de réseau comportent un certain nombre d'opérateurs d'un fournisseur de services qui sont présents dans un seul emplacement de détaillant ou auprès de plusieurs emplacements de détaillants.

17. Procédé selon la revendication 16, le procédé étant mis en oeuvre par le fonctionnement d'un système selon l'une quelconque des revendications 1 à 15.

18. Support lisible par un ordinateur de type non transitoire ayant, stockées sur celui-ci, des instructions exécutables qui, quand elles sont exécutées par le processeur d'une commande informatisée, amènent l'ordinateur à effectuer le procédé selon l'une quelconque des revendications 16 ou 17.
